# EUROPEAN PATENT APPLICATION

(11) **EP 1 816 051 A2**
(43) Date of publication of application: **08.08.2007**
(21) Application number: 07002146.4
(22) Date of filing: 01.02.2007
(51) Int. Cl.: B62B 3/10, B62B 3/02, B62B 3/06

(54) **Trolley, particularly for moving pieces of furniture**

(30) Priority: 02.02.2006 IT GE20060011
(71) Applicant: Casalino, Luigi, 16100 Genova (IT)
(72) Inventor: Casalino, Luigi, 16100 Genova (IT)
(74) Representative: Forattini, Amelia

(57) **Abstract**

A trolley with double platform, in which one platform can be adjusted with respect to the other one in terms of height and length; the trolley is provided with castor wheels and is particularly adapted to lift and move pieces of furniture that have different heights from the ground of the front part with respect to the rear part.

## Description

The present invention relates to a trolley, particularly for moving pieces of furniture.

Various types of trolley adapted to lift and move various goods are commercially known.

The commercially most widespread lift trolleys are manual, electric, motorised ones or transpallets. Those trolleys are adapted to lift and move various goods but are unsuitable when dealing with antique furniture that often have a different height from the ground of the front part with respect to the rear part, not including the feet.

Currently, the trolleys most often used for moving small or medium-sized pieces of furniture are hand trucks or flat bed trolleys generally used for carrying crates and parcels.

Those trolleys are however rather inconvenient for carrying pieces of furniture and similar objects.

The main problem of a flat bed trolley, for example, is that the piece of furniture to be loaded onto the trolley has to be lifted by one or more persons, depending on size and weight. Also, such flat bed trolleys may only be used to move the furniture but not to lift a piece of furniture.

When using a hand truck, the piece of furniture must be transported at an angle entailing a considerable effort on the part of the user and often, if the piece of furniture is large, it is not even possible to load it onto such a hand truck.

Another problem arises during the loading of furniture having particularly long legs. In this case, one or more people necessarily have to tip or turn upside down the piece of furniture in order to load it.

The problem of all types of lift trolley (fork-lift, platform-lift, et cetera) is instead that all commercially available solutions have a single loading platform, which in some cases can be extended in terms of length but never in terms of height. Therefore it can be understood why it is difficult to balance a piece of furniture whose base has a different height at the front part and at the rear part, unless it is placed on a platform which is larger than the piece of furniture itself.

Moreover, trolleys almost always have at least two fixed wheels, which have the advantage of providing a straighter path during movements but also have the limitation of having to manoeuvre the trolley, which, with the piece of furniture loaded thereon, cannot pass through narrow corridors, much less through single-leaf doors.

The aim of the present invention is to provide an improved trolley particularly adapted to carry furniture and similar objects.

An object of the invention is to provide a trolley that allows a single person to load and move even large pieces of furniture with minimal effort and without having to handle the furniture.

A further object of the present invention is to provide a trolley adapted to lift furniture and other objects in order to load them onto vans or trucks or onto shelves or also onto other pieces of furniture.

A further object of the invention is to provide a trolley that allows to move a piece of furniture, such as a cabinet, without removing the objects contained therein.

A further object of the invention is to provide a trolley having a compact structure and that allows to move a piece of furniture even in confined spaces.

This aim and these and other objects that will become better apparent hereinafter, are achieved by a trolley, particularly for moving pieces of furniture, comprising a chassis having upright members and base members provided with wheel members, characterized in that said base members support a split platform, said split platform being vertically movable; said split platform comprising a main member and a minor member which is movable with respect of said main member and can be raised at a higher level.

Further characteristics and advantages of the invention will become better apparent from the following detailed description of an embodiment thereof, illustrated, by way of example in the enclosed drawings in which:

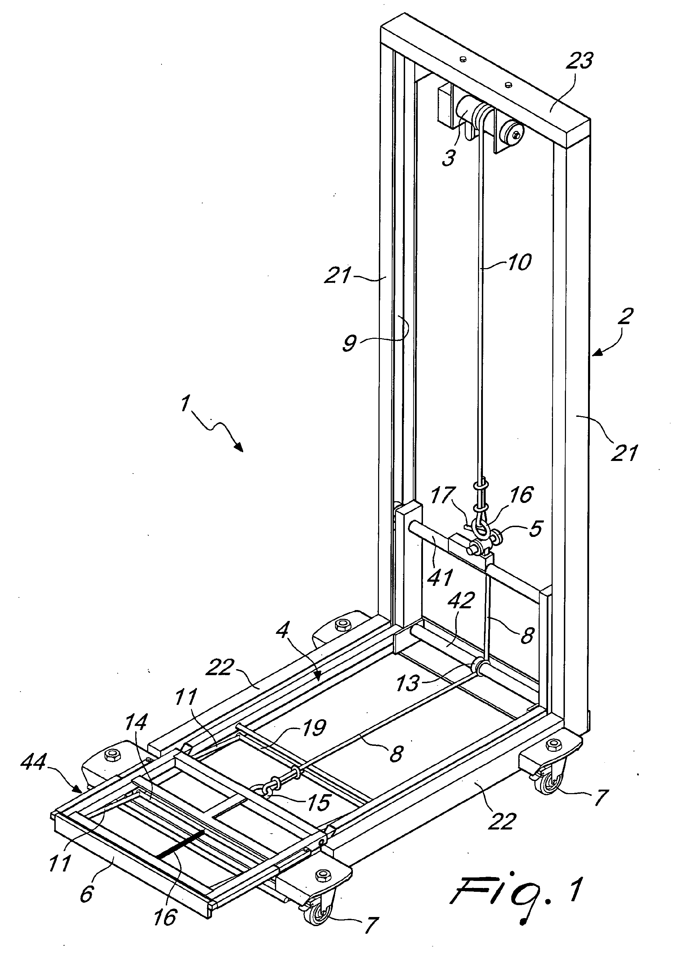

Figure 1 is a perspective view of the trolley according to the invention;

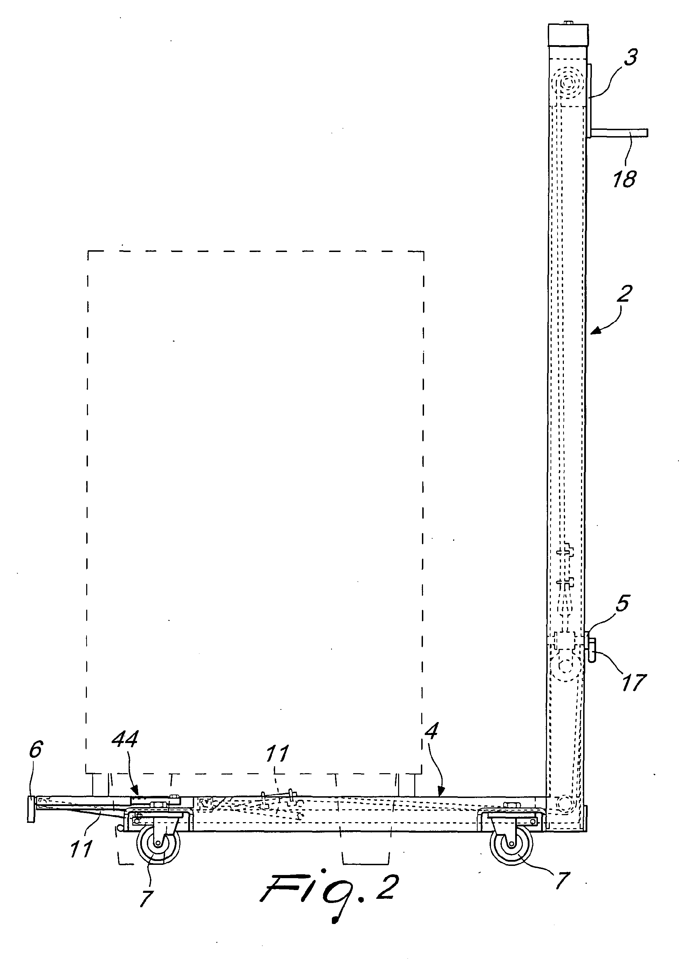

Figure 2 is a side view of the trolley of Figure 1;

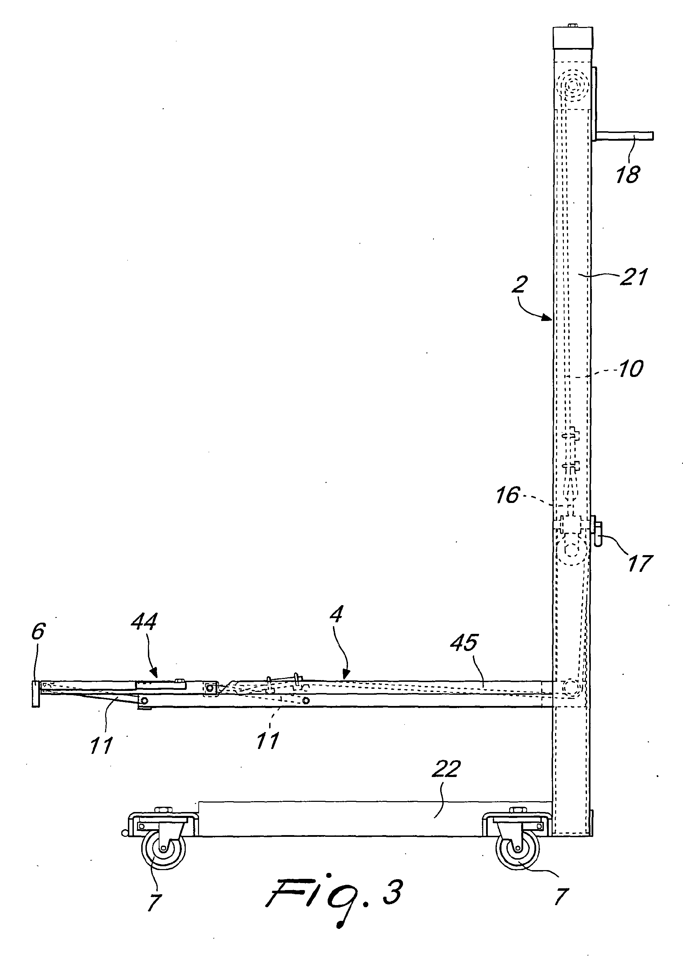

Figure 3 is a side view of the trolley shown with platform slightly raised;

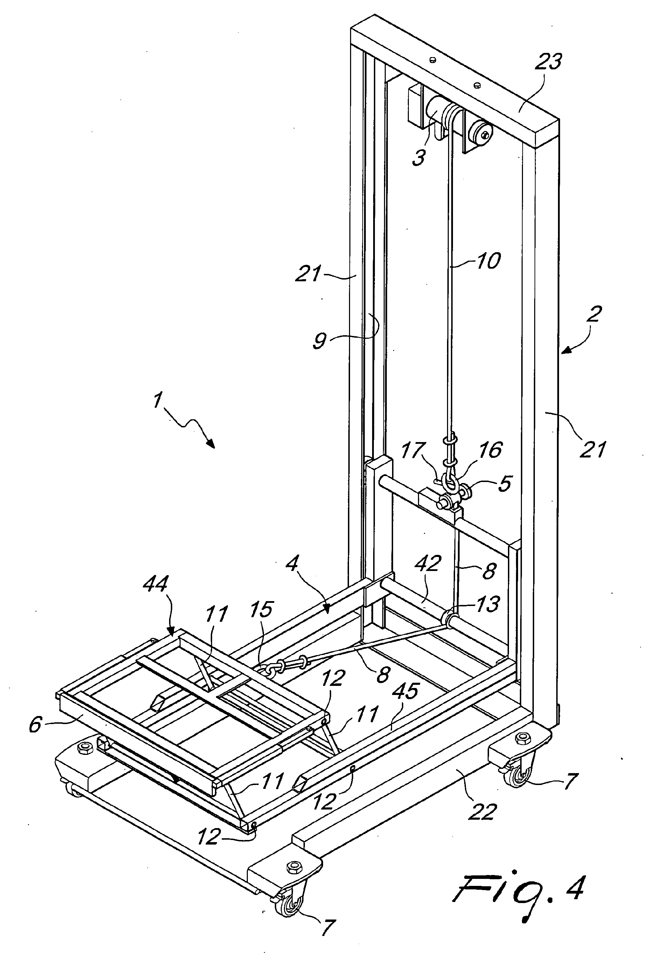

Figure 4 is a perspective view of the trolley showing the platform raised at two different levels;

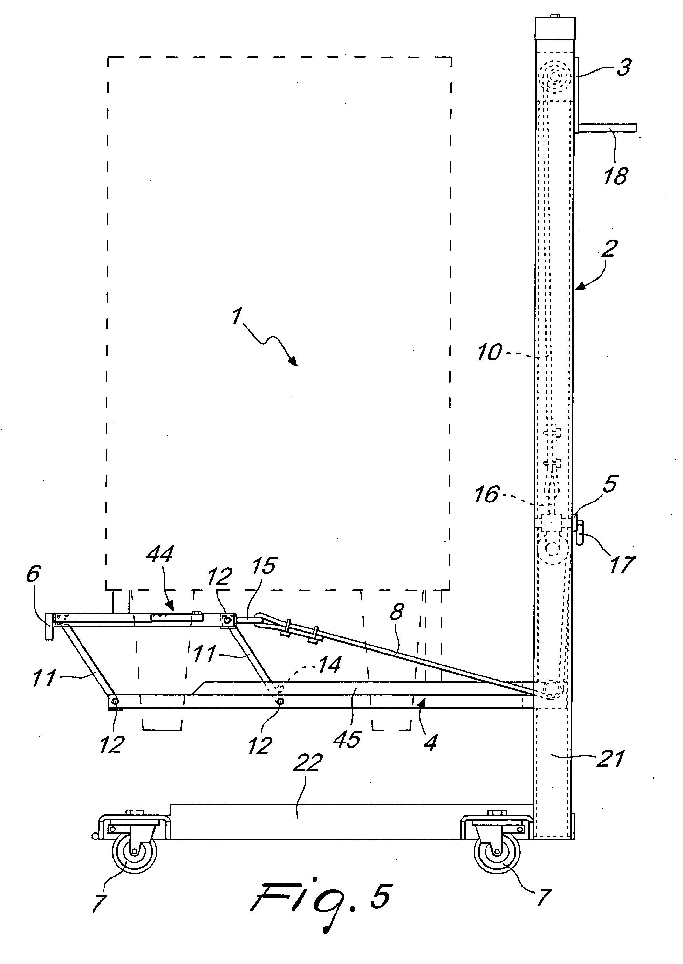

Figure 5 is a side view of the trolley showing the platform raised at two different levels and higher with respect to the preceding figure;

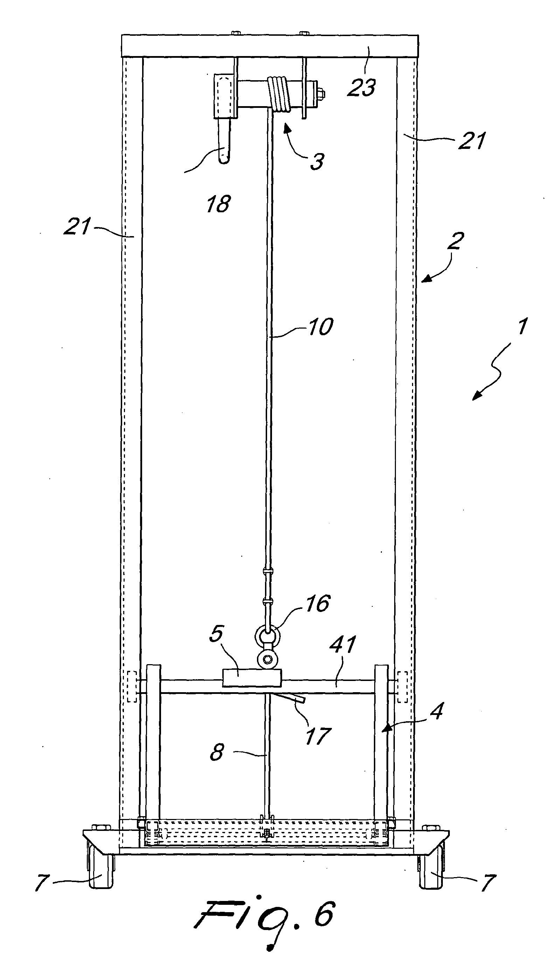

Figure 6 is a front view of the trolley;

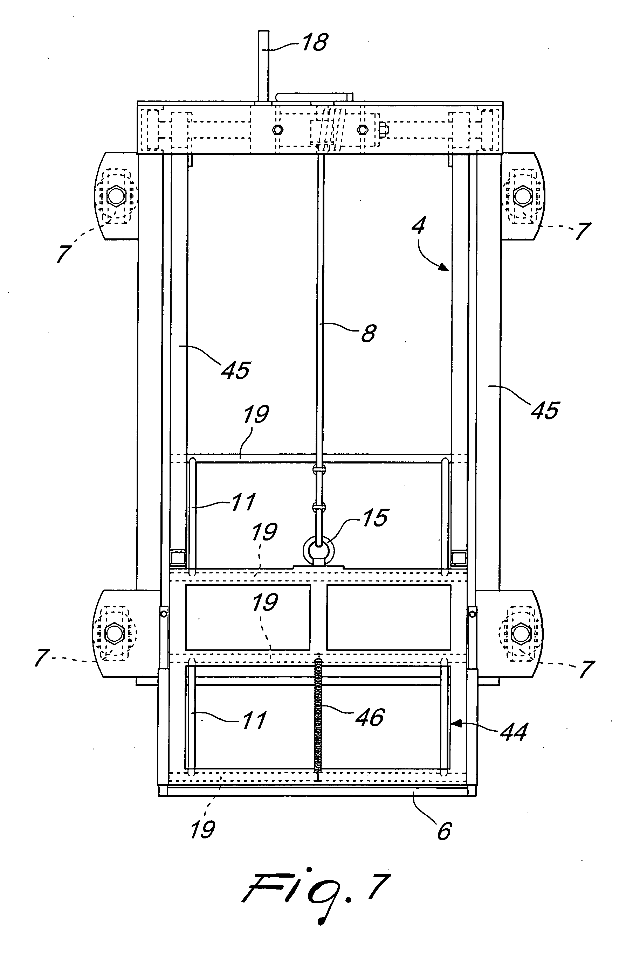

Figure 7 is a top view of the trolley;

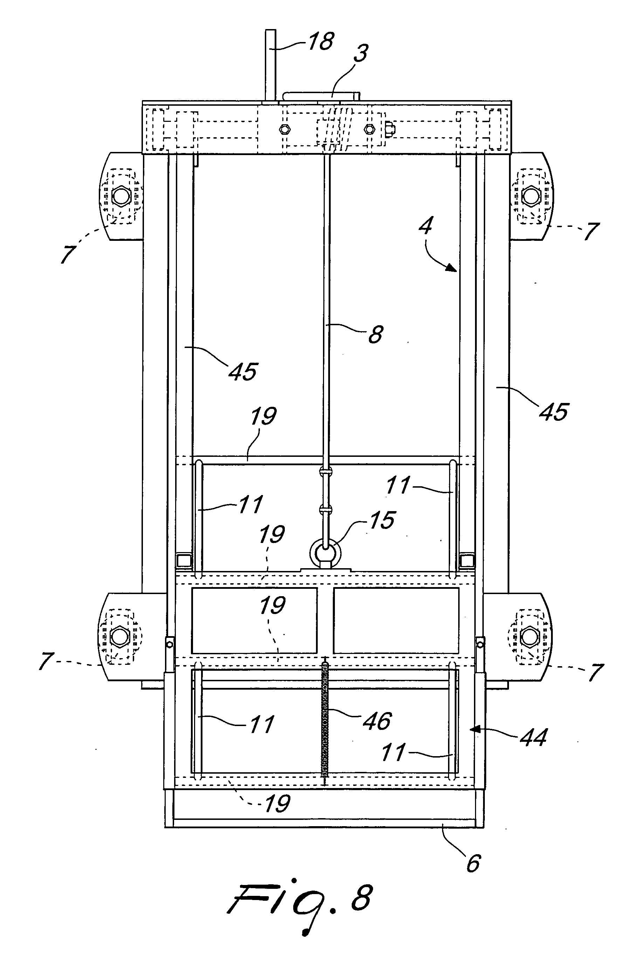

Figure 8 is a top view of the trolley shown with the extension system actuated;
Figure 9 is a perspective view of the locking system of the platform.

With reference to the cited figures, a trolley according to the invention, generally designated by the reference numeral 1, comprises a chassis 2 having upright members 21 and base members 22 provided with wheel members 7. Wheels 7 are preferably castor wheels. The upright members 21 are connected by a cross bar 23.

The chassis 2 supports a split platform which is vertically movable with respect to the base members.

The split platform comprises a main member 4 and a minor member 44 which is movable with respect to main member 4 and can be raised at a higher level.

A winch 3, mounted on the cross bar 23 of the chassis, controls the lifting of the split platform by means of a cable 10 which has an end associated with the main member 4 by means of a ring 16. Winch 3 is manually operated by a handle 18. Winch 3 may also be motorised.

The minor member 44 of the platform comprises an extension member 6.

A second winch 5 is arranged on a cross member 41 of the platform which slides along guides 9 provided in the uprights 21 of the chassis 2.

Second which 5 controls a cable 8 that is connected to minor member 44 for lifting it. Winch 5 is manually operated by a handle 17. Winch 5 may also be motorised.

Minor member 44 is associated with main member 4 of the platform by means of lever members 11. Levers 11 are hinged to minor member 44 and main member 4, through hinges 12, forming an articulated parallelogram. Each pair of levers 11 is joined by two cross bars 19.

By pulling cable 8, minor member 44 can be raised with respect to main member 4.

Cable 8 is fastened to minor member 44, by means of a ring 15, and turns around a pulley 13 arranged on cross beam 42 of the platform. Cable 8 extends vertically from pulley 13 to winch 5.

The maximum lifting height of minor member 44 is regulated by a peg 14 associated with a respective reinforcing bar 45 provided at each side of main member 4 and acting as a stop member for the rear levers 11.

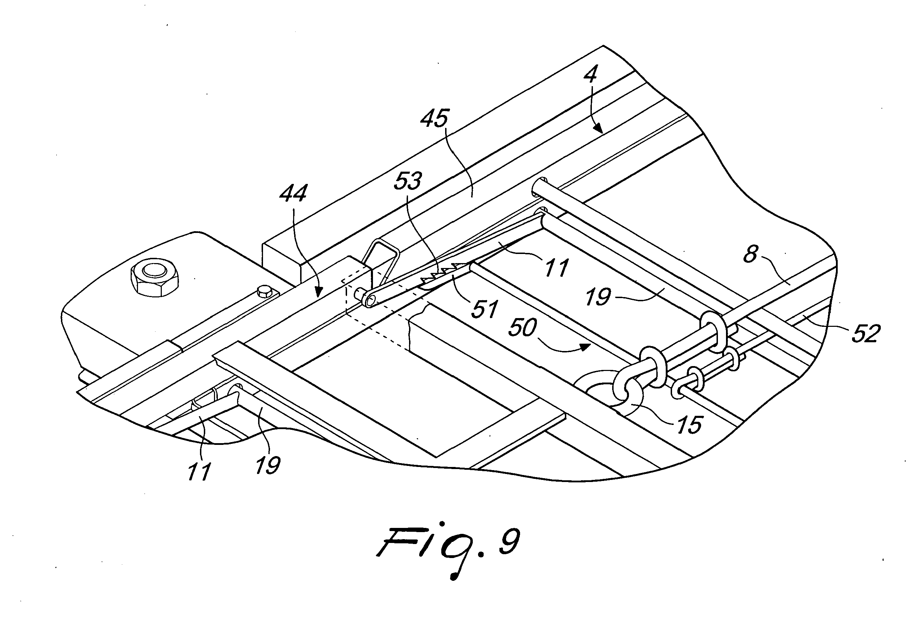

As schematically shown in Figure 9, the platform may be provided with a safety locking system, generally designated by the reference numeral 50, adapted to lock the minor member 44 in its raised position with respect to the main member 4.

The locking system 50 comprises a toggle 51 operated through a cable 52 and adapted to engage a serration 53 provided on one or both rear levers 11.

The operation of the trolley according to the invention is as follows.

Facing the piece of furniture to be moved, the trolley is pushed so as to insert its platform between the feet of the piece of furniture and below it.

The winch 3 is operated until the platform touches underneath the front side of the piece of furniture.

The front side of the piece of furniture, such as a cabinet for example, is very often lower, i.e. closer to the ground, than the rear side of the piece of furniture. In such case, the winch 5 may be operated in order to lift the minor member 44 of the platform until it makes contact with the rear side of the piece of furniture. The rear side of the piece of furniture may be 5 to 10 cm higher than the front one.

Once the platform is levelled under the piece of furniture, the winch 3 is operated until the legs of the piece of furniture no longer touch the ground and the weight of the piece of furniture bears only on the platform and therefore on the wheels 7.

The piece of furniture may be easily moved on the trolley.

The handles of the winches may be removed in order to minimize the size of the assembly.

In fact, the trolley carrying the piece of furniture may be easily moved around confined spaces such as doors and narrow corridors by pushing said piece of furniture from one of its shorter sides, since the castor wheels 7 allow the trolley to be moved sideways, and the chassis 2 provides only minimal hindrance because it is not very thick.

If the piece of furniture has to be placed on a higher level than the ground, for example loaded onto a truck, it is sufficient to raise the platform further by means of the winch 3.

When unloading the piece of furniture, the winch 3 is first carefully released and then the winch 5. The trolley may then be pulled out of the piece of furniture.

This application claims the priority of Italian Patent Application No. GE2006A000011, filed on 2 February 2006, the subject matter of which is incorporated herein by reference.

The trolley according to the invention may have numerous modifications and variations, within the scope of the appended claims. All the details may be substituted with technically equivalent elements and the materials employed, as well as the dimensions, may be any according to the specific needs and the state of the art.

The materials used, as well the dimensions, may of course be any according to the requirements and the state of the art.

## Claims

1. A trolley, particularly for moving pieces of furniture, comprising a chassis having upright members and base members provided with wheel members, **characterized in that** said base members support a split platform, said split platform being vertically movable; said split platform comprising a main member and a minor member which is movable with respect of said main member and can be raised at a higher level.

2. The trolley according to claim 1, **characterized in that** said wheel members are castor wheels.

3. The trolley according to claim 1 or 2, **characterized in that** said split platform is operated by a first winch.

4. The trolley according to claim 3, **characterized in that** said minor member of said split platform is operated by a second winch.

5. The trolley according to one or more of the preceding claims, **characterized in that** said upright members are connected by a cross bar.

6. The trolley according to one or more of the preceding claims, **characterized in that** said first winch is mounted on said cross bar and controls the lifting of said split platform by means of a cable which has an end associated with said main member; said first winch having a removable handle.

7. The trolley according to one or more of the preceding claims, **characterized in that** said minor member of the platform comprises an extension member adapted to extend the working length of said platform.

8. The trolley according to one or more of the preceding claims, **characterized in that** said second winch is arranged on a cross member of the platform which slides along guides provided in said uprights of said chassis.

9. The trolley according to one or more of the preceding claims, **characterized in that** said second which controls a second cable which is connected to said minor member for lifting it; said second winch having a removable handle.

10. The trolley according to one or more of the preceding claims, **characterized in that** said minor member is associated with said main member by means of lever members; said lever members being hinged to said minor member and to said main member forming an articulated parallelogram; said lever members comprising two pairs of levers; in each of said pair, said levers being joined by two cross bars.

11. The trolley according to one or more of the preceding claims, **characterized in that** it comprises a peg associated with a respective reinforcing bar provided at each side of main member and acting as a stop member for the rear levers in order to regulate the maximum lifting height of said minor member.

12. The trolley according to one or more of the preceding claims, **characterized in that** said platform comprises a safety locking system adapted to lock said minor member in its raised position with respect to the main member.

13. The trolley according to one or more of the preceding claims, **characterized in that** said locking system comprises a toggle, operated through a cable, and adapted to engage a serration provided on one or both of said rear levers.
